# EUROPEAN PATENT APPLICATION

(11) **EP 3 159 218 A2**
(43) Date of publication of application: **26.04.2017**
(21) Application number: 16191557.4
(22) Date of filing: 29.09.2016
(51) Int. Cl.: B60R 13/02, B60J 5/06

(54) **PINCH-PROTECTION SLIDING TRIM COVER ASSEMBLY FOR A VEHICLE SLIDING DOOR**

(30) Priority: 30.09.2015 US 201514870420
(71) Applicant: Dura Operating, LLC, Auburn Hills, MI 48326 (US)
(72) Inventor: Tavakoli-Targhi, Ali, Rochester Hills, MI 48307 (US); Unveren, Cumhur, Commerce Township, MI 48390 (US); Langreet, Alex Mark, Mount Clemens, MI 48043 (US)
(74) Representative: Bungartz Christophersen Partnerschaft mbB Patentanwälte

(57) **Abstract**

A vehicle sliding door trim assembly includes a sliding door panel (12) movable between open and closed positions along a travel path. A door actuation assembly is connected with the sliding door panel. A trim panel is attached to the sliding door panel. The trim panel includes at least one slot (18) formed therein. Guide tracks (20) are positioned within the at least one slot. A plurality of rigid trim components (22, 30) are pivotally linked to each other and constrained within the guide tracks. The plurality of trim components pivot and slide within the guide tracks and seamlessly cover the at least one slot when the sliding door panel is moved along the travel path.

## Description

### FIELD OF THE INVENTION

The invention relates to cover assemblies for sliding doors in a vehicle.

### BACKGROUND OF THE INVENTION

Vehicle sliding doors may often be moved from open and closed positions utilizing an actuation mechanism. Often, such actuation mechanisms may require specific design parameters such as an open slot to allow movement of the actuation mechanism relative to the vehicle. However, the existence of an open slot on a door interior trim would make the components of a sliding door mechanism visible and accessible to a user of the vehicle. There is therefore a need in the art for a sliding trim cover assembly that provides a seamless cover of the door actuation mechanism throughout the travel of the door from open to closed positions and vice versa. There is also a need in the art for a sliding trim cover assembly that provides an aesthetically pleasing visual appearance of the sliding door throughout its travel.

### SUMMARY OF THE INVENTION

In one aspect, there is disclosed a vehicle sliding door trim assembly that includes a sliding door panel movable between open and closed positions along a travel path. A rail is attached to the sliding door panel. A carriage slidably engages with the rail and is movable along the rail. A hinge arm linkage is operatively connected to the carriage. A trim panel is attached to the sliding door panel. The trim panel includes at least one slot formed therein. Guide tracks are positioned within the at least one slot and are fixedly connected to the rail. A plurality of rigid trim components are pivotally linked to each other and constrained within the guide tracks. The plurality of trim components pivot and slide within the guide tracks and seamlessly cover the at least one slot when the sliding door panel is moved along the travel path.

In another aspect there is disclosed a vehicle sliding door trim assembly that includes a sliding door panel movable between open and closed positions along a travel path. A door actuation assembly is connected with the sliding door panel. A trim panel is attached to the sliding door panel. The trim panel includes at least one slot formed therein. Guide tracks are positioned within the at least one slot and are fixedly connected relative to the sliding door panel. A plurality of rigid trim components are pivotally linked with each other. A first of the plurality of rigid trim components is pivotally linked at one end to the vehicle and covers a portion of the door actuation assembly along the entire travel path. At an opposing end the first rigid trim component is pivotally linked to an adjacent rigid trim component. The plurality of rigid trim components is constrained within the guide tracks such that the plurality of trim components pivot and slide within the guide tracks and seamlessly cover the at least one slot and door actuation assembly when the sliding door panel is moved along the travel path.

In yet another aspect there is disclosed a vehicle sliding door trim assembly that includes a sliding door panel movable between open and closed positions along a travel path. A door actuation assembly is connected with the sliding door panel. A trim panel is attached to the sliding door panel. The trim panel includes at least one slot formed therein. Guide tracks are positioned within the at least one slot and are fixedly connected relative to the sliding door panel. A plurality of rigid trim components is pivotally interconnected with each other and slidably constrained within the guide tracks. The plurality of trim components slide and pivot within the guide tracks upon movement of the sliding door panel. The plurality of rigid trim components pivotally overlap with each other along the entire travel path.

### BRIEF DESCRIPTION OF THE DRAWINGS

Figure 1 is a side view of a vehicle including a sliding door panel including an actuation mechanism and trim assembly;
Figure 2 is a perspective view of the sliding door mechanism and trim assembly with the door panel in a closed position along the travel path;
Figure 3 is a perspective view of the sliding door mechanism and trim assembly with the door panel in a mid position along the travel path;
Figure 4 is a perspective view of the sliding door mechanism and trim assembly with the door panel in an open position along the travel path;
Figure 5 is perspective views of the sliding door trim assembly and actuation mechanism;
Figure 6 is a top view of the trim assembly including the plurality of rigid trim components that are pivotally linked with each other and constrained within the guide tracks;
Figure 7 is an exploded perspective view of the vehicle sliding door trim assembly including the guide tracks and plurality of rigid trim components.

### DETAILED DESCRIPTION OF THE PREFERRED EMBODIMENTS

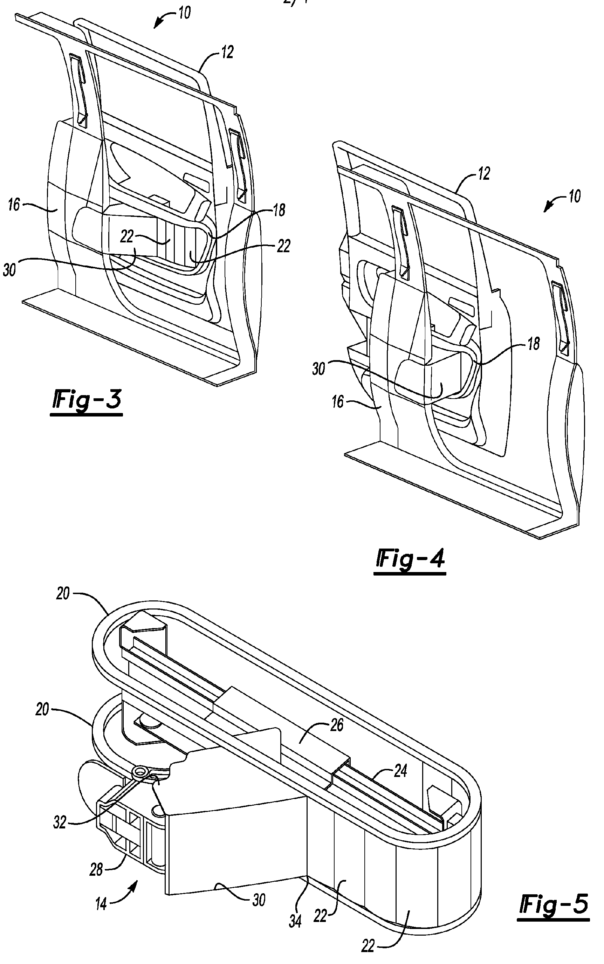

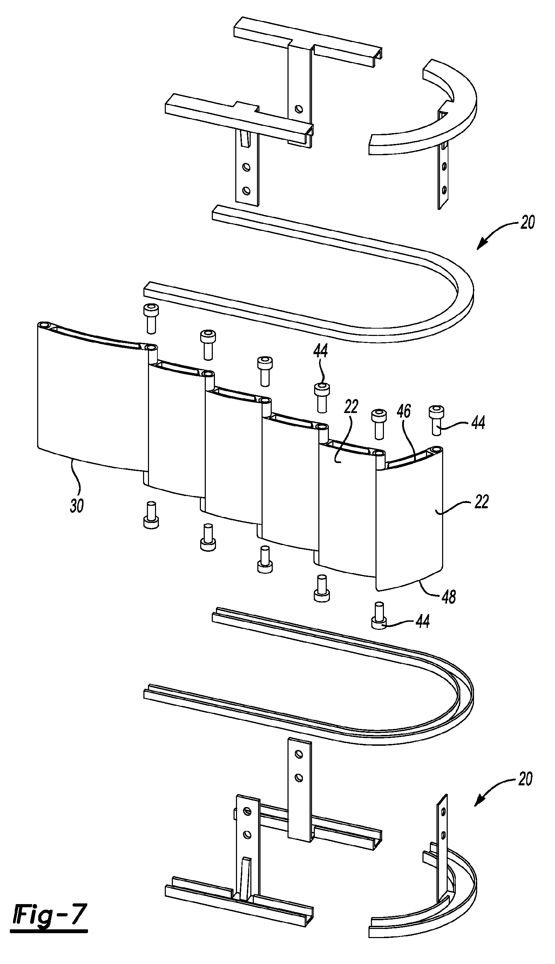

Referring to the figures, there is shown a vehicle sliding door trim assembly 10 that includes a sliding door panel 12 that is movable between open and closed positions along a travel path. The door actuation assembly 14 is connected with the sliding door panel 12. A trim panel 16 is attached to the sliding door panel 12. The trim panel 16 includes at least one slot 18 formed therein. Guide tracks 20 (see Figure 5 and Figure 7) are positioned within the at least one slot 18 and are fixedly connected relative to the sliding door panel 12. A plurality of rigid trim components 22 are pivotally interconnected with each other and slidably constrained within the guide tracks 20. The plurality of trim components 22 slide and pivot within the guide tracks 20 upon movement of the sliding door panel. The plurality of rigid trim components 22 are pivotally overlapped with each other along the entire travel path, as will be described in more detail below.

In one aspect, as best shown in Figure 5 the door actuation assembly 14 that is connected with the sliding door panel may include a rail 24 that is attached to the sliding door panel 12. A carriage 26 is slidably engaged with the rail 24 and moves along the rail 24. A hinge arm linkage 28 operatively connects to the carriage 26.

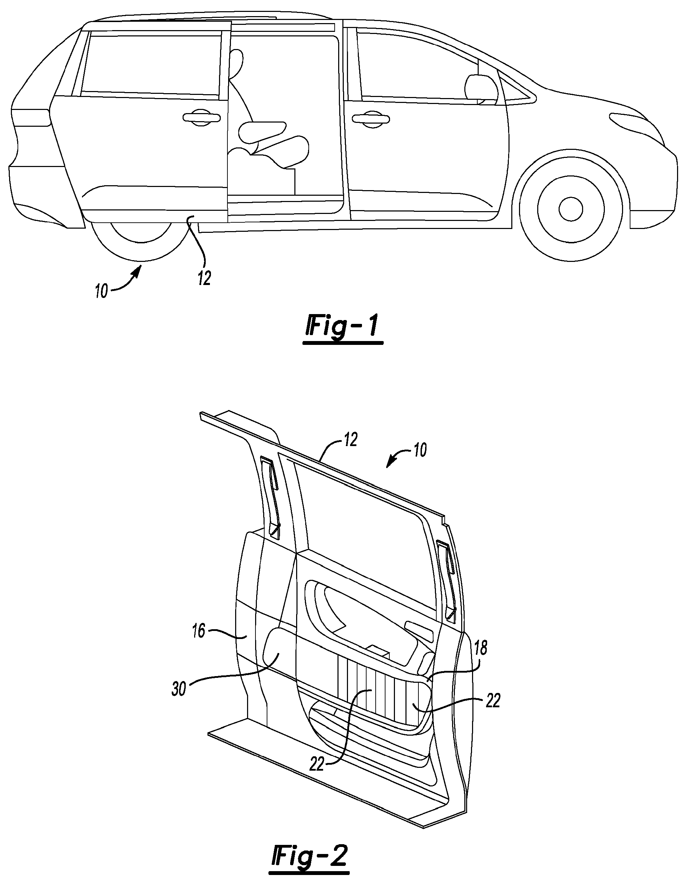

As best shown in Figures 2-5 and 7, a first trim component 30 of the plurality of rigid trim components 22 is pivotally linked at one end 32 to the vehicle. The first rigid trim component 30 covers the hinge arm linkage 28 along the entire travel path. An opposing end 34 of the first rigid trim component 30 is pivotally linked to an adjacent rigid trim component 22. In one aspect the first rigid trim component 30 includes a c-shaped cross section to accommodate the hinge arm linkage 28.

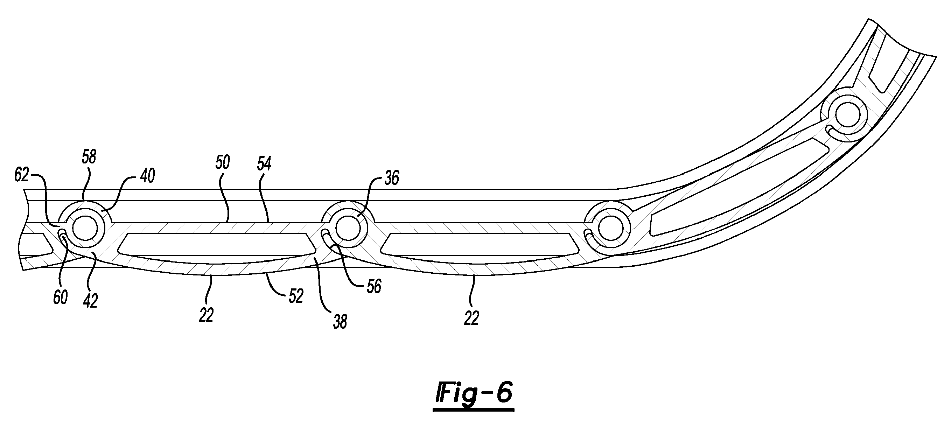

Referring to Figure 6, the rigid trim components 22 may include a cylindrical pivot structure 36 on one end 38 of the trim component 22 and a partial hollow cylindrical structure 40 on an opposing end 42 of the rigid trim component 22. In one aspect, the cylindrical pivot structure 36 of one of the plurality of trim components 22 is positioned and nested within the hollow cylindrical structure 40 of an adjacent of the plurality of rigid trim components 22.

Referring to Figure 7, the rigid trim components 22 may include roller structures 44 on upper and lower portions 46, 48 of the trim components 22. The roller structures 44 are disposed within the guide tracks 20 and allow for seamless movement of the rigid trim components 22 within the guide tracks 20. In one aspect, the plurality of rigid trim components 22 may include a body 50 having a class A front surface 52 connected to a rear surface 54. The class A surface 52 may be positioned toward an interior of the vehicle to provide for an aesthetically pleasing appearance.

Again referring to Figure 6, the first end 38 of the rigid trim component 22 may include the rear surface 54 extending to the cylindrical pivot structure 36 and the front surface 52 terminates at a curved slot 56 that extends toward the rear surface 54. The second end 42 of the rigid trim component 22 includes the rear surface 54 extending to a rear curved wall 58 and the front surface 52 extending to a front curved wall 60. The front and rear curved walls 58, 60 are separated by a gap 62. In one aspect, the front curved wall 58 of one rigid trim component 22 is received and nested in the curved slot 56 of an adjacent rigid trim component 22 such that whereupon movement along the travel path the rigid trim components 22 angularly displace relative to each other and the nesting of the curved slot 56 and front curved wall 58 is maintained over the entire travel path. In this manner, the plurality of rigid trim components 22 seamlessly covers the at least one slot 18 when the sliding door panel 12 is moved along the travel path.

In operation, the plurality of rigid trim components 22 may be assembled with each other by inserting from the top one rigid trim component 22 relative to the other adjacent trim component 22 and then positioning the plurality of rigid trim components 22 and roller members 44 within the guide tracks 20. The first rigid trim component 30 is coupled to the vehicle and covers a hinge arm linkage 28 that is operatively connected to the carriage 26 which is in turn slidably engaged with the rail 24 and movable along the rail 24. The opening and closing of the door panel 12 may be described as a four bar linkage mechanism including a control lever having a point constrained to move along a guide curve and a carriage 26 constrained to move along a straight line rail. Both the rail 24 and guide curve or guide track 20 are rigidly attached to the door panel 12 such that the sliding door mechanism provides a simultaneous pivoting and sliding side door for a vehicle.

While the carriage 26 literally moves from one end of the rail 24 to the other, the hinge arm 28 and control lever simultaneously rotate pivotally from a start angle to a final angle. As a result, the vehicle door panel 12 translates from a closed position to an open position and vice versa. As described above, the open slot 18 on the vehicle door interior trim panel 16 accommodates the actuation mechanism 14. The guide tracks 20 move with the door actuation mechanism14 as the sliding door mechanism moves from the fully closed position towards an open position. Displacement of the guide tracks 20 is a linear translation relative to the carriage 26 similar to the rail 24 described above. The linear translation of the guide tracks 20 forces the plurality of rigid trim components 22 that are pivotally linked to each other to slide along the guide tracks 20.

When the door panel 12 is in the full open position the sliding rigid trim components 22 are positioned inside the door panel 12 and not visible from an interior as best shown in Figure 1. When the door panel 12 moves back from the full open position towards a closed position, a reverse sequence of the interactions occurs in which the linear motion of the guide tracks 20 relative to the carriage 26 allows the sliding trim components 22 to ride along the tracks out of the door panel 12 and maintain coverage of the open slot 18 on the door trim panel 16 throughout the travel path.

## Claims

1. A vehicle sliding door trim assembly comprising:
a sliding door panel (12) movable between open and closed positions along a travel path;
a trim panel (16) attached to the sliding door panel (12), **characterized in that** the trim panel (16) includes at least one slot (18) formed therein;
guide tracks (20) are positioned within the at least one slot (18),
and **in that** a plurality of rigid trim components (22; 30) pivotally linked to each other and constrained within the guide tracks (20) wherein the plurality of trim components (22; 30) pivot and slide within the guide tracks (20) when the sliding door panel (12) is moved along the travel path.

2. The vehicle sliding door trim assembly according to claim 1, **characterized in that** a rail (24) is attached to the sliding door panel (12); a carriage (26) is slidably engaged with the rail (24) and movable along the rail (24) and a hinge arm linkage (28) is operatively connected to the carriage (26); the guide tracks (20) fixedly connected to the rail (24); and **in that** the plurality of trim components (22) seamlessly covers the at least one slot (18).

3. The vehicle sliding door trim assembly according to claim 1 or claim 2, **characterized in that** a first rigid component (30) of the plurality of rigid trim components is pivotally linked at one end to a vehicle, the first trim component (30) covering the hinge arm linkage (28) along the entire travel path and at an opposing end (34) of the first trim component (30) the first trim component (30) is pivotally linked to an adjacent rigid trim component (22).

4. The vehicle sliding door trim assembly according to any of the preceding claims **characterized in that** a first rigid trim component (30) includes a c-shaped cross section.

5. The vehicle sliding door trim assembly according to any of the preceding claims, **characterized in that** the rigid trim components (22) include a cylindrical pivot structure (36) on one end (38) of the trim component (22) and a partial hollow cylindrical structure (40) on an opposing end (42).

6. The vehicle sliding door trim assembly according to claim 5, **characterized in that** the cylindrical pivot structure (36) of one of the plurality of rigid trim components (22) is positioned and nested within the partial hollow cylindrical structure (40) of an adjacent of the plurality of rigid trim components (22).

7. The vehicle sliding door trim assembly according to any of the preceding claims, **characterized in that** the rigid trim components (22) include roller structures (44) on upper portions (46) and lower portions (48) of the trim components (2), the roller structures (44) disposed within the guide tracks (20).

8. The vehicle sliding door trim assembly according to any of the preceding claims, **characterized in that** the rigid trim components (22) include a body having a class A front surface (52) connected to a rear surface (54).

9. The vehicle sliding door trim assembly according to any of the preceding claims, **characterized in that** a first end (38) of the rigid trim components (22) includes the rear surface (54) extending to a cylindrical pivot structure (36) and the front surface (52) terminates at a curved slot (56) that extends to the rear surface (54).

10. The vehicle sliding door trim assembly according to claim 9, **characterized in that** a second end (42) of the rigid trim component (22) includes the rear surface (54) extending to a rear curved wall (58) and the front surface (52) extending to a front curved wall (60), the front and rear curved walls (60; 58) separated by a gap (62).

11. The vehicle sliding door trim assembly according to claim 10, **characterized in that** the front curved wall (60) of one rigid trim component is received and nested in the curved slot (56) of an adjacent rigid trim component.

12. The vehicle sliding door trim assembly according to claim 11, **characterized in that** upon movement along the travel path the rigid trim components (22) angularly displace relative to each other and the nesting of the curved slot (56) and front curved wall (60) is maintained over the entire travel path.

13. A vehicle sliding door trim assembly comprising according to any of the preceding claims, **characterized in that**
a door actuation assembly (14) is connected with the sliding door panel (12);
the guide tracks (20) are fixedly connected relative to the sliding door panel (12); and **in that**
a first (30) of the plurality of rigid trim components is pivotally linked at one end to a vehicle, the first trim component (30) covering a portion of the door actuation assembly (14) along the entire travel path and at an opposing end (34) of the first rigid trim component (30) the first rigid trim component is pivotally linked to an adjacent rigid trim component (22), wherein the plurality of trim components (22) seamlessly covers the at least one slot (18) and door actuation assembly (14) when the sliding door panel (12) is moved along the travel path.

14. The vehicle sliding door trim assembly according to any of the preceeding claims, **characterized in that** a door actuation assembly (14) is connected with the sliding door panel (12); the door actuation assembly (14) includes a rail (24) attached to the sliding door panel (12), a carriage (26) slidably engaged with the rail (24) and movable along the rail (24), and a hinge arm linkage (28) operatively connected to the carriage (36).

15. A vehicle sliding door trim assembly comprising according to any one of the preceding claims, **characterized in that**
the plurality of rigid trim components (22) are pivotally overlapped with each other along the entire travel path.
